(19) Europäisches Patentamt
European Patent Office
Office européen des brevets

(11) EP 3 110 868 B1

(12) **EUROPEAN PATENT SPECIFICATION**

(45) Date of publication and mention of the grant of the patent:
**13.11.2019 Bulletin 2019/46**

(21) Application number: **15706041.9**

(22) Date of filing: **25.02.2015**

(51) Int Cl.:
***C08G 18/75*** (2006.01) ***C08G 18/67*** (2006.01)
***C08G 18/34*** (2006.01) ***C08G 18/66*** (2006.01)
***C08G 18/42*** (2006.01) ***C08G 18/81*** (2006.01)
***C08G 18/08*** (2006.01) ***C08G 18/48*** (2006.01)
***C08G 18/40*** (2006.01) ***C08G 18/70*** (2006.01)
***C08J 5/18*** (2006.01)

(86) International application number:
**PCT/EP2015/053924**

(87) International publication number:
**WO 2015/128373 (03.09.2015 Gazette 2015/35)**

(54) **CURABLE AQUEOUS POLYURETHANE DISPERSIONS MADE FROM RENEWABLE RESOURCES**

AUS ERNEUERBAREN RESSOURCEN HERGESTELLTE, HÄRTBARE WÄSSRIGE POLYURETHANDISPERSIONEN

DISPERSIONS DE POLYURÉTHANNE AQUEUSES DURCISSABLES FABRIQUÉES À PARTIR DE RESSOURCES RENOUVELABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 US 201461946016 P**
**30.04.2014 US 201461986170 P**

(43) Date of publication of application:
**04.01.2017 Bulletin 2017/01**

(73) Proprietor: **Arkema France**
**92700 Colombes (FR)**

(72) Inventors:
- **KLANG, Jeffrey**
  **West Chester, Pennsylvania 19382 (US)**
- **LU, Jin**
  **Westchester, Pennsylvania 19382 (US)**
- **VAPPALA, Indu**
  **Exton, Pennsylvania 19341 (US)**
- **HE, Yuhong**
  **Honey Brook, Pennsylvania 19344 (US)**

(74) Representative: **Killis, Andréas**
**ARKEMA France**
**Département Propriété Industrielle**
**420, rue d'Estienne d'Orves**
**92705 Colombes Cedex (FR)**

(56) References cited:
**EP-A1- 2 644 634**
**US-A- 6 162 506**
**US-A1- 2006 089 453**

EP 3 110 868 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to curable polyurethane aqueous dispersions made from renewable resources. More specifically, the present invention relates to curable polyurethane aqueous dispersions made from 1,4:3,6-dianhydrohexitol-based polyols.

Polyurethane dispersions find many uses in industry. For example, polyurethane dispersions may be used to coat wood, plastic, metal, glass, fibers, textiles, leather, stone, concrete ceramic or composite and other substrates to provide protection against mechanical, chemical and/or environmental effects. Polyurethane dispersions may also be used for adhesives, sealants, inks and other applications, including cosmetic applications.

Polyurethane dispersions are typically produced by first forming a polyurethane pre-polymer, which comprises terminal groups, such as isocyanate (NCO) groups, which can undergo subsequent chain extension reactions. The polyurethane pre-polymer or simply pre-polymer is generally formed by reacting an excess of an isocyanate with a polyol to form the isocyanate-terminated pre-polymer.

The polyol typically provides flexibility and elasticity to the polyurethane. Attempts have been made to use renewable resources, such as, for example vegetable oils, but such attempts have resulted in soft polyurethanes that lack the mechanical hardness and chemical resistance desired in many applications.

Attempts have also been made to use polyurethane dispersions using isosorbide. Due to its structure, isosorbide leads to brittleness in polyurethanes.

Chang et al. ("Linseed-oil-based waterborne UV/air dual-cured wood coatings", Progress in Organic Coatings 76 (2013), 1024-1031) disclose an UV curable polyurethane dispersion made from linseed oil, a vegetable oil.

Xia et al. ("Soybean Oil-Isosorbide-Based Waterborne Polyurethane-Urea Dispersions", ChemSusChem 2011, 4, 386-391) disclose a conventional polyurethane dispersion made from a soybean oil derivative and isosorbide. The isosorbide is used as a monomeric chain extender and not as part of the polyol. The polyurethane dispersion disclosed by Xia et al. is not UV curable.

WO 2011/047369 discloses a polyurethane dispersion made using an epoxidized or partially epoxidized triglyceride, such as epoxidized soy oil.

U.S. Patent No. 8,106,148 discloses polyester polyols that incorporate isosorbide for use in powder coatings. The polyester polyols include non-renewable ingredients such as phthalates to achieve the desired properties. U.S. Patent No. 8,106,148 does not disclose UV curable compositions.

WO 2011/098272 discloses polyurethane dispersions based on renewable diisocyanates, including isosorbide-based diisocyanates. WO 2011/098272 does not disclose UV curable polyurethane dispersions.

U.S. Patent Application Publication No. 2005/0143549 discloses polyurethanes formed from polyester polyols. The polyester polymers are formed from a dimer fatty acid and/or a dimer fatty acid diol and may additionally be formed from a 1,4:3,6-dianhydrohexitol, such as isosorbide. The polyurethane is used as a hot melt adhesive.

Therefore, there is a need for a polyurethane dispersion based on renewable resources that provides a polyurethane having desirable mechanical strength and chemical resistance that is not soft or brittle.

The present invention relates to curable polyurethane aqueous dispersions and methods of producing such polyurethane aqueous dispersions.

One aspect of the present invention relates to a method of producing a curable polyurethane aqueous dispersion comprising :

i) reacting at least one polyol component a) comprising a1) a non-ionic polyol, a2) at least one polyol bearing at least one ionic or potentially ionic group comprising an acid group or salt thereof and a3) at least one ethylenically unsaturated monoalcohol or polyol with b) at least one polyisocyanate, wherein the number of isocyanate (NCO) groups of the at least one polyisocyanate is in excess with respect to the number of hydroxyl (OH) groups of said at least one polyol component a), wherein said at least one polyol component a) comprises, in particular in the non-ionic polyol a1), carbon atoms from renewable resources, said polyol a1) being derived from a 1,4:3,6-dianhydrohexitol and wherein said at least one ethylenically unsaturated monoalcohol and/or polyol a3) is an isocyanate-reactive ethylenically unsaturated monoalcohol or polyol selected from the group consisting of polyester (meth)acrylates, epoxy (meth)acrylates, polyether (meth)acrylates, polyurethane (meth)acrylates and other hydroxyl group-containing (meth)acrylates;
ii) neutralizing at least partly, preferably completely the acid groups of said polyol a2) with a neutralizing agent and agitating to obtain a polyurethane pre-polymer aqueous dispersion ; and
iii) chain extending said pre-polymer of step ii) by reacting with an isocyanate-reactive chain extender.

The present invention does also cover an aqueous dispersion of a polyurethane pre-polymer which can be obtained at the end of said step ii) of said method as defined above.

Another aspect of the present invention relates to a curable polyurethane, wherein said curable polyurethane

is formed by the reaction of a) at least one polyol component comprising a1) a non-ionic polyol, a2) at least one polyol bearing at least one ionic or potentially ionic group comprising an acid group or salt thereof and a3) at least one ethylenically unsaturated monoalcohol and/or polyol, with b) at least one polyisocyanate, wherein the number of isocyanate (NCO) groups of the at least one polyisocyanate is in excess with respect to the number of hydroxyl (OH) groups of the at least one polyol component a), wherein a1), a2) and a3) in said at least one polyol component a) are as defined previously, wherein said acid group of polyol a2) being either in the acid form or in the at least partly neutralized form and preferably in the neutralized form (completely neutralized form) and said reaction being continued by an extension reaction with an isocyanate-reactive chain extender in a second step.

The present invention also relates to curable aqueous compositions comprising as a curable binder at least one aqueous polyurethane dispersion as defined above according to the present invention.

The present invention also relates to the use of the aqueous polyurethane dispersions of the present invention in coatings, in particular paints, varnishes, inks or in adhesives, sealants and surface modifiers, as well as cured polyurethane resulting from (or made from) the aqueous polyurethane dispersions described herein.

Figure 1 is a schematic of a synthesis process for forming a UV-curable polyurethane dispersion using a bio-based polyol.

One aspect of the present disclosure relates to a curable polyurethane aqueous dispersion formed by reacting at least one polyol component with at least one polyisocyanate, wherein the at least one polyol component comprises carbon atoms from renewable resources, also defined as a bio-polyol or biosourced polyol. Such a bio-polyol preferably has a content by weight of $^{14}C$ such that the $^{14}C/^{12}C$ ratio is greater than $0.1\times10^{-12}$.

As used herein, the phrase "carbon atoms from renewable resources" refers to carbon atoms that are derived, sourced from, or made from naturally renewable resources, such as, for example, bio-mass or plant-based sources.

According to at least one embodiment, a polyurethane pre-polymer may be formed by reacting at least one polyol component a) with at least one polyisocyanate b), wherein the number of isocyanate (NCO) groups of the at least one polyisocyanate is in excess with respect to the number of hydroxyl (OH) groups of the at least one polyol component and wherein the at least one polyol component a) comprises carbon atoms from renewable resources (or is a bio-polyol as defined above).

As used here, the term "pre-polymer" refers to an ethylenically unsaturated compound that comprises one or more isocyanate terminal groups. The pre-polymer may be reacted with other monomers, oligomers or compounds containing functional groups (i.e., isocyanate-reactive groups) capable of reacting with the pre-polymer, e.g., in a chain extension reaction.

In at least one embodiment, the polyol component a) comprises a1) a non-ionic polyol, a2) at least one polyol bearing at least one ionic group from acids and a3) at least one ethylenically unsaturated monoalcohol or polyol.

So, the first subject of the invention relates to a curable polyurethane aqueous dispersion, wherein said curable polyurethane is formed by :

i) the reaction of a) at least one polyol component comprising a1) a non-ionic polyol, a2) at least one polyol bearing at least one ionic or potentially ionic group comprising an acid group or salt thereof and a3) at least one ethylenically unsaturated monoalcohol and/or polyol, with b) at least one polyisocyanate, wherein the number of isocyanate (NCO) groups of the at least one polyisocyanate is in excess with respect to the number of hydroxyl (OH) groups of the at least one polyol component a), wherein said at least one polyol component a) comprises, in particular in the non-ionic polyol a1), carbon atoms from renewable resources, said polyol a1) being derived from a 1,4:3,6-dianhydrohexitol with said acid group of polyol a2) being either in the acid form or in the at least partly neutralized form, preferably in the neutralized form and with said at least one ethylenically unsaturated monoalcohol and/or polyol a3) being an isocyanate-reactive ethylenically unsaturated monoalcohol or polyol selected from the group consisting of polyester (meth)acrylates, epoxy (meth)acrylates, polyether (meth)acrylates, polyurethane (meth)acrylates and other hydroxyl group-containing (meth)acrylates, said reaction being continued by

ii) an extension reaction with an isocyanate-reactive chain extender in a second step.

According to at least one embodiment, the non-ionic polyol a1) is formed by reacting a 1,4:3,6-dianhydrohexitol in a condensation polymerization reaction with other renewable diols or diacids or higher functional carboxylic acids or by using a 1,4:3,6-dianhydrohexitol as an initiator for ring opening polymerization of lactide.

The 1,4:3,6- dianhydrohexitol may be selected from the group consisting of isosorbide, isomannide and isoidide and in particular the said 1,4:3,6-dianhydrohexitol is isosorbide.

In accordance with at least one embodiment, the non-ionic polyol is formed by reacting a 1,4:3,6-dianhydrohexitol in a polycondensation polymerization reaction with at least one diacid or higher functional carboxylic acid and optionally at least one other diol and/or polyol. The phrase "diol and/or polyol" as in present invention means diol and/or higher functional polyol, the latter meaning with a functionality of at least 3. Said diol is different from 1,4:3,6 dianhydrohexitol. As used herein, the phrase "higher functional carboxylic acid" refers to a carboxylic acid having an acid functionality of

at least 3. Preferably, said diol and/or polyol is of renewable origin and so it is a bio-polyol. More preferably, the said diacid or higher functional carboxylic acid is also of renewable origin.

In at least one embodiment, the non-ionic polyol may be formed by a condensation polymerization reaction with a 1,4:3,6-dianhydrohexitol and at least one other diol or polyol and at least one diacid or higher functional carboxylic acid. Examples of other diols include, but are not limited to, 1,2-ethanediol, 1,2-propanediol, 1,3-propanediol, 1,4-butanediol, 1,5-pentanediol, 1,6-hexanediol, 1,10-decanediol, 1,12-dodecanediol, 1,3-butanediol, 2,2-dimethyl-1,3-propanediol, 2-methyl-1,3-propanediol, diethylene glycol, triethylene glycol, dipropylene glycol, tripropylene glycol, 1,4- and 1,6-dimethylolcylcohexane, $C_{36}$-dimer diol, hydroxypivaloyl hydroxy pivalate and ethoxylated and/or propoxylated derivatives of the above. Suitable tri- and higher hydroxyl functional components include : glycerol, trimethylolpropane, trimethylolethane, pentaerythritol, di-glycerol, di-trimethyolpropane, di-pentaerytritol, sorbitol and ethoxylated and/or propoxylated derivatives of the above.

In at least one embodiment, the non-ionic polyol a1) is formed by reacting a 1,4:3,6-dianhydrohexitol with at least one diacid or higher functional carboxylic acids. According to at least one embodiment, the diacid or higher functional carboxylic acid is selected from malonic acid, succinic acid, maleic acid, fumaric acid, itaconic acid, glutaric acid, citric acid, adipic acid, pimelic acid, sebacic acid, dodecanedioic acid, phthalic acid, isophthalic acid, terephthalic acid, naphthalene dicarboxylic acid, $C_{36}$-dimer fatty acids, $C_{54}$-trimer fatty acids (triacids), trimellitic acid, pyromellitic acid and the anhydride derivatives of the above.

According to at least one embodiment, the non-ionic polyol a1) is formed using a 1,4:3,6-dianhydrohexitol as a hydroxyl functional initiator molecule in a ring opening polymerization of lactide. Lactide is a cyclic diester of lactic acid. Other monomers capable of undergoing ring opening polymerization, such as lactones, can also be used to make copolymeric polyols. So, according to a particular embodiment the at least one non-ionic polyol a1) comprises or is a polyol formed by reacting a 1,4:3,6-dianhydrohexitol with a hydroxyl functional monocarboxylic acid or by reacting a 1,4:3,6-dianhydrohexitol, in particular as an initiator molecule in a ring opening polymerization with a lactone, preferably with caprolactone. Suitable lactones include $\alpha,\alpha$-dimethyl-$\beta$-propiolactone, $\lambda$-butyrolactone and $\varepsilon$-caprolactone and $\varepsilon$-caprolactone is a preferred lactone.

According to at least one embodiment, the amount of 1,4:3,6-dianhydrohexitol in the polyol component may be used to control the glass transition temperature (Tg) and hardness of the resulting polyurethane. For example, the said polyol a), in particular polyol a1), may contain from about 10 wt% to about 75 wt% of 1,4:3,6-dianhydrohexitol. Properties of the polyurethane may also be controlled by use of one or more other polyols not containing 1,4:3,6-dianhydrohexitol in combination with the 1,4:3,6-dianhydrohexitol-containing polyol.

According to at least one embodiment, other renewable source compounds may be used in addition to the 1,4:3,6:-dianhydrohexitol. For example, the non-ionic polyol a1) may be a polyester polyol and comprise (or may be derived from) renewable versions of polyacids and polyols such as unsaturated fatty acids, $C_{36}$ and $C_{54}$ dimer and trimer products and furan derivatives such as 2,5-furandicarboxylic acid. These and other exemplary polyols and polyacids or cyclic esters available from renewable resources are shown below.

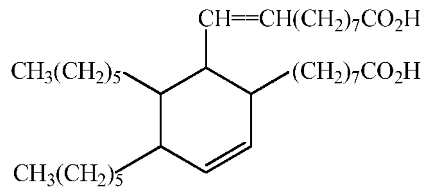

**Dimer Fatty Acids**

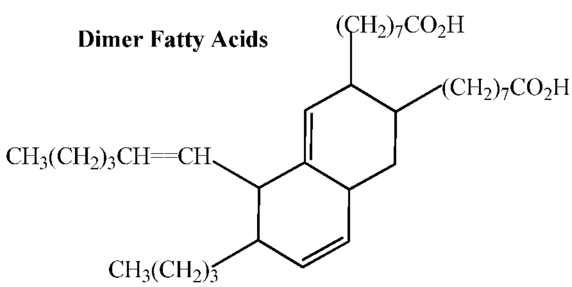

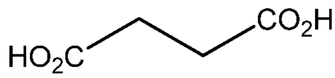

Succinic Acid

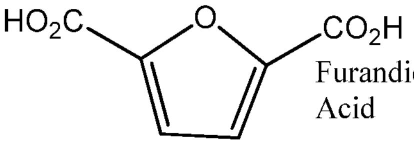

Furandicarboxylic Acid

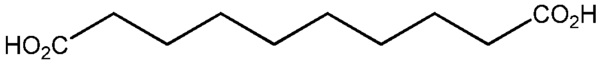

Sebacic Acid

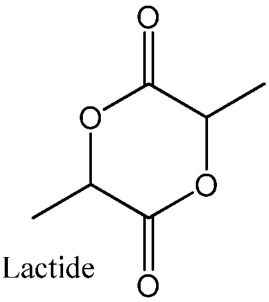

Lactide

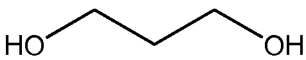

1,3-propanediol

The at least one polyol component a) also comprises a2) at least one polyol bearing at least one ionic or potentially ionic group, in particular comprising an acid group or salt thereof. The acid group may be selected from a carboxy group (-$CO_2H$), a sulfonic group (-$SO_3H$), sulfonyl group (-$SO_2H$), a phosphoryl group (-$PO_3H_2$) and a phosphonyl group (-$PO_2H$). According to at least one embodiment, the acid group of the at least one polyol a2) is selected from a carboxy group, a sulfonic group or a sulfonyl group and is preferably a carboxyl group. Examples of acid group-containing polyols a2) include, but are not limited to, 2-carboxy 1,3-propane diol, 2-sulfo 1,3-propane diol, 2-methyl-2-carboxy hexane diol, 3-methyl-3-carboxy hexane diol. 4-methyl-4-carboxy hexane diol. 2-ethyl-2-carboxy 1,3-propane diol. 2-ethyl-2-carboxy butane diol, dimethylolpropionic acid, dimethylolbutanoic acid, 2-sulfo-1,4-butanediol, 2,5-dimethyl-3-sulfo-2,5-hexanediol, 2-aminoethanesulfonic acid, N-(1,1-dimethyl-2-hydroxyethyl)-3-amino-2-hydroxypropanesulfonic acid, 2-aminoethylaminoethanesulfonic acid and salts of the above.

The at least one polyol component further comprises a3) at least one ethylenically unsaturated a3.1) monoalcohol and/or a3.2) polyol. Preferably, said monoalcohol a3.1) or polyol a3.2) may bear from 1 to 5, preferably from 2 to 5 ethylenically unsaturated groups, more preferably (meth)acrylate groups per molecule. Preferably, the OH functionality of said polyol a3.2) may vary from 2 to 5 and preferably said ethylenically unsaturated polyol a3.2) is an ethylenically unsaturated diol.

The monoalcohols as defined according to a3.1) do introduce terminal ethylenic unsaturations, while diols introduce lateral unsaturations and higher functional polyols create branched structures with unsaturation in both the polyurethane main chain backbone (lateral or side unsaturation) and in grafted branches (lateral unsaturation but on grafted polyurethane branches). According to a specific embodiment, said polyol component a3) is a mixture of monoalcohols a3.1) and of polyols a3.2). According to at least one embodiment, the at least one ethylenically unsaturated monoalcohol or polyol comprises a monool or diol. The ethylenically unsaturated monoalcohol a3.1) and/or polyol a3.2) are selected from the group consisting of polyester (meth)acrylates, epoxy (meth)acrylates, polyether (meth)acrylates, polyurethane (meth)acrylates and other hydroxyl group-containing (meth)acrylates. As examples of hydroxyl-containing (meth)acrylates, we may cite without limitation as monools : an hydroxy alkyl (meth)acrylate with alkyl being in $C_2$ to $C_4$ which may be alkoxylated or a multifunctional (meth)acrylate having a free hydroxyl, like trimethylol propane di(meth)acrylate which may be alkoxylated, ditrimethylol propane tri(meth)acrylate which may be alkoxylated, pentaerythritol penta(meth)acrylate which may be alkoxylated. As examples of hydroxyl-containing polyol (meth)acrylates suitable for a3.2), we may cite : trimethylol mono(meth)acrylate (diol), ditrimethylol di(meth)acrylate (diol), ditrimethylol (meth)acrylate (triol), pentaerythritol di(meth)acrylate (diol), pentaerythritol mono(meth)acrylate (triol), dipentaerythritol tetra(meth)acrylate (diol), dipentaerythritol di (meth)acrylate (tetrol), dipentaerythritol tri-(meth)acrylate (triol), all of the above being potentially alkoxylated. Alkoxylated units may be ethoxy and/or propoxy and/or tetramethylenoxy with at least one alkoxy unit by OH, preferably from 1 to 10 and more preferably from 1 to 6 alkoxy units by OH.

In at least one embodiment, the at least one polyol a) component comprises carbon atoms from renewable resources. For example, the renewably resourced carbon atoms may be provided by the non-ionic polyol a1), the acid group-containing polyol a2) and/or the ethylenically unsaturated monoalcohol or polyol a3). In at least one embodiment, the renewably resourced carbon atoms may be provided by the non-ionic polyol a1) and/or the ethylenically unsaturated monoalcohol or polyol a3). The non-ionic polyol a1) comprises renewably resourced carbon atoms.

The use of carbon-based starting materials of natural and renewable origin can be detected by virtue of the isotopic ratio of the carbon atoms participating in the composition of the final product. This is because, unlike substances resulting from fossil materials, substances composed of renewable starting materials comprise $^{14}C$. All carbon samples drawn from living organisms (animals or plants) are in fact a mixture of 3 isotopes : $^{12}C$ (representing ~98.892%), $^{13}C$ (~1.108%) and $^{14}C$ (~ $1.2\times10^{-10}$%). The $^{14}C/^{12}C$ ratio of living tissues is identical to that of the atmosphere. In the environment, $^{14}C$ exists in two predominant forms : in inorganic form, e.g., carbon dioxide gas ($CO_2$) and in organic form, e.g., carbon incorporated in organic molecules. In a living organism, the $^{14}C/^{12}C$ ratio is kept constant metabolically as the carbon is continually exchanged with the environment. As the proportion of $^{14}C$ is substantially constant in the atmosphere, it is the same in the organism, as long as it is living, since it absorbs the $^{14}C$ like it absorbs the $^{12}C$. The mean $^{14}C/^{12}C$ ratio is equal to $1.2\times10^{-12}$. $^{12}C$ is stable, that is to say that the number of $^{12}C$ atoms in a given sample is constant over time. $^{14}C$ for its part is radioactive and each gram of carbon of a living being, comprises sufficient $^{14}C$ isotope to give 13.6 disintegrations per minute. The half-life (or period) $T_{1/2}$, related to the disintegration constant of $^{14}C$, is 5730 years. Due to this period of time, the $^{14}C$ content is regarded as constant in practice from the extraction of the naturally renewable starting materials to the manufacture of the final product.

In at least one embodiment, the at least one polyol component a) of the present disclosure has a content by weight of $^{14}C$ such that the $^{14}C/^{12}C$ ratio is greater than $0.1\times10^{-12}$. According to at least one embodiment, the at least one polyol component a) has a content by weight of $^{14}C$ such that the $^{14}C/^{12}C$ ratio is greater than and preferably greater than $0.2\times10^{-12}$, greater than $0.4\times10^{-12}$, greater than $0.6\times10^{-12}$, greater than $0.8\times10^{-12}$ or greater than $1.0\times10^{-12}$.

Currently, there exist at least two different techniques for measuring the $^{14}C$ content of a sample :

- by liquid scintillation spectrometry ; or
- by mass spectrometry in which the sample is reduced to graphite or to gaseous $CO_2$ and analyzed in a mass spectrometer. This technique uses an accelerator and a mass spectrometer to separate the $^{14}C$ ions from the $^{12}C$ ions and to thus determine the ratio of the two isotopes.

All these methods for measuring the $^{14}C$ content of substances are clearly described in the standards ASTM D 6866 (in particular D6866-06) and in the standards ASTM D 7026 (in particular 7026-04). The measurement method preferably used is the mass spectrometry described in the standard ASTM D 6866-06 (accelerator mass spectroscopy).

Examples of epoxy (meth)acrylates as alcoholic component a3) defined above, include the reaction products of acrylic or methacrylic acid or mixtures thereof with glycidyl ethers or esters. The glycidyl ethers or esters can have aliphatic, cycloaliphatic or aromatic structures and contain from two up to about six epoxy functional groups. Di-epoxy functional materials are preferred. Glycidyl ethers can be prepared from a hydroxyl functional precursor and an epoxy compound such as epichlorohydrin. Many of the hydroxyl functional components listed in the section above are suitable for preparation of aliphatic glycidyl ethers. Specific examples of precursors for aliphatic glycidyl ethers include : 1,4-butanediol, 2,2-dimethyl-1,3-propanediol, 1,6-hexanediol, 1,4- and 1,6-dimethylolcylcohexane, poly(ethylene glycol), poly(propylene glycol), poly(tetramethylene glycol), trimethylolpropane, pentaerythritol, glycerol and sorbitol. Specific examples of precursors for aromatic glycidyl ethers include : bisphenol A, bisphenol F and resorcinol.

Suitable epoxy (meth)acrylates can also include the reaction products of acrylic or methacrylic acid or mixtures thereof with epoxidized deriviatives of natural oils and their component fatty acids such as soybean, linseed, castor, rapeseed, safflower, olive, tall and others which will be known to those skilled in the art.

Examples of suitable polyether (meth)acrylates include the esters of acrylic or methacrylic acid or mixtures thereof with polyether polyols. Suitable polyether polyols can be linear or branched substances containing ether bonds and terminal hydroxyl groups. Polyether polyols can be prepared by ring opening polymerization of cyclic ethers such as tetrahydrofuran or alkylene oxides with an initiator molecule. Suitable initiator molecules include water, alcohols (including polyols) and amines. Examples of suitable amines include : ethylene diamine, 4,4'-diaminodiphenylmethane, diethylene triamine and hydroxyl amines such as ethanol amine and diethanol amine. Examples of suitable alkylene oxides include : ethylene oxide, propylene oxide, butylene oxides, epichlorohydrin and glycidol. The polyether (meth)acrylates can be used individually or in combination.

Examples of polyurethane (meth)acrylates include the polyaddition products of the di- or polyisocyanates described below with isocyanate-reactive ethylenically unsaturated components as described in the sections above as polyester-, epoxy- or polyether (meth)acrylates or immediately below as monomeric hydroxyl containing (meth)acrylates.

Examples of monomeric hydroxyl containing (meth)acrylates are acrylic, methacrylic or mixed esters with simple diols, triols, tetrols or polyols where the esterification process is carried out such that residual hydroxyl groups remain

in the final product. Examples include (meth)acrylate esters of : 1,2-ethanediol, 1,2-propanediol, 1,3-propanediol, 1,4-butanediol, 1,5-pentanediol, 1,6-hexanediol, 1,10-decanediol, 1,12-dodecanediol, 1,3-butanediol, 2,2-dimethyl-1,3-propanediol, 2-methyl-1,3-propanediol, diethylene glycol, triethylene glycol, dipropylene glycol, tripropylene glycol, 1,4- and 1,6-dimethylolcylcohexane, glycerol, trimethylolpropane, trimethylolethane, pentaerythritol, di-glycerol, di-trimethylolpropane, di-pentaerytritol and sorbitol. The monomeric hydroxyl containing (meth)acrylates can be used individually or in mixtures.

In accordance with at least one embodiment, the polyisocyanate b) comprises at least two isocyanate functional groups. In at least one embodiment, the polyisocyanate b) may comprise a diisocyanate having two isocyanate functional groups, such as, an aliphatic diisocyanate (e.g., isophorone diisocyanate). In other embodiments, the polyisocyanate may comprise a plurality of isocyanate groups, such as three or four or more isocyanate groups.

Non-limiting examples of compounds that may comprise the polyisocyanate include, di- or polyisocyanates such as aliphatic, aromatic and cycloaliphatic structures with at least two isocyanate functional groups per molecule. Examples of suitable polyisocyanate b) components include : isophorone diisocyanate, hexamethylene diisocyanate, 2,3,3-trimethyl hexamethylene diisocyanate, 4,4'-dicylcohexylmethane diisocyanate, 1,5-naphthalene diisocyanate, 2,4- or 2,6-toluene diisocyanate and their isomeric mixtures, 4,4'-diphenylmethane diisocyanate, and their respective dimeric or trimeric derivatives and mixtures thereof. The said polyisocyanates may also be modified by allophanate groups.

Polyisocyanates formed by creation of isocyanurate (especially in diisocyanate trimers) or biuret structures (especially in diisocyanate dimers) are also suitable as are mixtures of isocyanates. Polyisocyanate b) with a functionality of 3 may be an isocyanurate triisocyanate, bearing a triisocyanurate ring, which may provide high thermal stability performance. Polyisocyanates based on renewable resources such as those described, for example at page 2, line 12 to page 6, line 10 in WO 2011/098272, may also be used in accordance with the present disclosure.

In accordance with at least one embodiment, a pre-polymer may be formed by reacting the polyol component a) with the polyisocyanate b) described above. In at least one embodiment, the number of isocyanate (NCO) groups of the at least one polyisocyanate b) is in excess with respect to the reacting number of hydroxyl (OH) groups of the at least one polyol component a).

In at least one embodiment, the acid group of polyol a2) can be neutralized to the salt form before or during dispersion by addition of a base. Suitable bases include inorganic hydroxides or carbonates and amines and combinations. In at least one preferred embodiment, the acid group of polyol a2) is neutralized with a tertiary amine.

The polyols of the present invention may also be used to form polyurethane dispersions in accordance with the methods disclosed in provisional U.S. Patent Application No. 61/907,434 titled "Solvent-free aqueous polyurethane dispersions and methods of producing solvent-free aqueous polyurethane dispersions", filed on November 22, 2013 and provisional U.S. Patent Application No. 61/986,165 titled "Solvent-free aqueous polyurethane dispersions and methods of producing solvent-free aqueous polyurethane dispersions".

The polyurethane dispersion may also be formed using additional components.

According to at least one embodiment, the at least one polyol a) and the at least one polyisocyanate b) may be reacted in the presence of a curable or reactive diluent, which means an ethylenically unsaturated diluent which is able to co-react during the cure with said ethylenically unsaturated polyurethane. The curable or reactive diluent is at least one ethylenically unsaturated monomer or oligomer, preferably monomer, which is compatible (non demixing) with said curable polyurethane. The curable diluent, for example, may comprise materials with two or more ethylenically unsaturated groups, such as, for example, (meth)acrylate groups. The curable diluents, which can be monomeric or oligomeric, can be used individually or in combination. In particular, these reactive diluents should not bear isocyanate-reactive groups, such as hydroxyls or amines. Suitable monomeric examples include the (meth)acrylate esters of 1,2-ethanediol, 1,2-propanediol, 1,3-propanediol, 1,4-butanediol, 1,3-butanediol, 1,5-pentanediol, 1,6-hexanediol, 1,10-decanediol, 1,12-dodecanediol, 1,3-butanediol, 2,2-dimethyl-1,3-propanediol, 2-methyl-1,3-propanediol, diethylene glycol, triethylene glycol, tetraethylene glycol, dipropylene glycol, tripropylene glycol, 1,4- and 1,6-dimethylolcylcohexane, glycerol, trimethylolpropane, trimethylolethane, pentaerythritol, di-glycerol, di-trimethylolpropane, di-pentaerytritol, sorbitol and alkoxylated derivatives of the above. Many such materials are available from Sartomer as "SR" products. The reactive diluent helps to lower the minimum film formation temperature (MFFT) of the system, promote particle coalescence and also contributes to cured coating properties. So, according to a specific option, the polyurethane polymer aqueous dispersion of the invention further comprises a curable ethylenically unsaturated monomer acting as a curable diluent and which diluent is present in the reaction of step i) as defined above, related with the pre-polymer formation. In fact, said diluent is used as a reaction diluent in step i) and as a reactive diluent during the cure of the curable polyurethane polymer.

Oligomeric curable diluents include the polyester-, polyether- or urethane (meth)acrylates as described above, except that when used as a reactive diluent the hydroxyl group is fully (meth)acrylated. Many such products are available from Sartomer as "CN" products.

The polyurethane pre-polymer as obtained in dispersion after partly neutralizing, preferably completely neutralizing the acid groups of polyol a2), needs to be subjected to a chain extension reaction with a chain extender c), in

order to form the said polyurethane polymer in the final aqueous polyurethane polymer dispersion according to the present invention. The chain extension further increases the molecular weight of the polyurethane pre-polymer and/or vary or adjust the properties of the final said curable polyurethane. For example, the chain extender c) may be selected to alter/adjust the hardness, weatherability, flexibility or adhesiveness. The chain extenders c) may be selected from polyols and polyamines, such as, for example, diols and diamines. In at least one preferred embodiment, the chain extender c) is selected from polyamines and more preferably from diamines.

The chain extender may comprise two or more functional groups reactive with the isocyanate terminal groups of the polyurethane pre-polymer. In at least one embodiment, the chain extender comprises two isocyanate-reactive functional groups and functions to extend the polyurethane. In other embodiments, the chain extender may comprise three or more functional groups and functions to both extend the polyurethane chain and increase the branching of the chains but without any crosslinking. In at least one embodiment, a mixture of chain extenders comprising two functional groups and three or more functional groups may be used. In case the global number average functionality (over components a + b + chain extender) is higher than 2, then branching occurs. The curable polyurethane of the present invention may have a linear or branched chain structure without any crosslinked structure present in the said curable polyurethane polymer either before or after its aqueous dispersion and chain extension. In case the global average functionality is higher than 2, those skilled in the art know how to prevent any crosslinking reaction. Generally, the addition of one reactant to the other is made progressively and the proportions of the reactants (ratio of NCO groups to NCO-reactive groups) and the conversion of these groups is so controlled in order to fulfill the Macosko-Miller relationship as disclosed in Macromolecules, vol. 9, pp 199-221 (1976). This relationship is relating the critical ratio in equivalents $r_c$, of A and B and the limit conversion $x_g$ (limit of gelification by crosslinking) to the average number functionality $f_A$ and $f_B$ of respectively reactants A and B with A being the reactant which may correspond to polyol a) and B to polyisocyanate b) as it concerns the pre-polymer formation reaction and in the case of the polyurethane extension reaction A may correspond to the chain extender c) and B to the NCO pre-polymer with the Macosko-Miller relationship to be fulfilled being defined as follows :

$$r_c * x_g^2 = 1 / [ (f_B-1)*( f_A-1)$$

In at least one embodiment, the reaction mixture for forming the polyurethane dispersion or pre-polymer may also comprise a catalyst and/or other additives, such as, for example, inhibitors, fillers, stabilizers photoinitiators, pigments, etc. External surfactants are not necessary and could be used only optionally.

According to at least one embodiment of the present disclosure, the polyurethane polymer aqueous dispersion is a radiation curable or a peroxide curable aqueous polyurethane dispersion. In at least one embodiment, the polyurethane dispersion may be cured by exposure to actinic radiation. According to at least one embodiment, the polyurethane dispersion is cured by exposure to ultraviolet light.

A second subject of the present invention relates to a method of producing the said curable polyurethane aqueous dispersion as defined above according to the present invention which method comprises the following steps :

i) reacting at least one polyol component a) comprising a1) a non-ionic polyol, a2) at least one polyol bearing at least one ionic or potentially ionic group comprising an acid group or salt thereof and a3) at least one ethylenically unsaturated monoalcohol or polyol, with b) at least one polyisocyanate, wherein the number of isocyanate (NCO) groups of the at least one polyisocyanate is in excess with respect to the number of hydroxyl (OH) groups of said at least one polyol component a), wherein said at least one polyol component a) comprises, in particular in the non-ionic polyol a1), carbon atoms from renewable resources, said polyol a1) being derived from a 1,4:3,6-dianhydrohexitol and wherein said at least one ethylenically unsaturated monoalcohol and/or polyol a3) is an isocyanate-reactive ethylenically unsaturated monoalcohol or polyol selected from the group consisting of polyester (meth)acrylates, epoxy (meth)acrylates, polyether (meth)acrylates, polyurethane (meth)acrylates and other hydroxyl group-containing (meth)acrylates;

ii) neutralizing at least partly, preferably completely the acid groups of said polyol a2) with a neutralizing agent and agitating (dispersing) to obtain a polyurethane pre-polymer aqueous dispersion ; and

iii) chain extending said pre-polymer of step ii), by reacting with an isocyanate-reactive chain extender c).

Another subject covered by the present invention is the polyurethane pre-polymer aqueous dispersion as obtainable by the method as defined just above, the method comprising the steps i) and ii) as defined just above and said pre-polymer being obtained at the end of said step ii), before the step iii) of chain extending.

The present invention does also cover a curable aqueous composition, which comprises as a curable binder at least one aqueous polyurethane dispersion as defined here-above according to the present invention or as obtained by the method of producing defined here-above according to the invention. More particularly, the said curable composition

is selected from curable coatings in particular paints, varnishes, inks compositions or from adhesives, sealants or cosmetics compositions.

Another subject of the invention relates to the use of the aqueous polyurethane polymer dispersion of the invention in coatings in particular in paints, varnishes and inks or in adhesives, in sealants and in cosmetics.

Finally, the invention covers the finished product which is a cured polyurethane, which results from the cure of an aqueous polyurethane dispersion as defined according to the present invention, more particularly the said cured polyurethane being used as a coating, preferably as a paint, a varnish and an ink or being used as an adhesive, as a sealant or as a cosmetic.

In accordance with at least one embodiment, the polyurethane polymer aqueous dispersions of the present disclosure may be used in coatings, in particular to coat objects, such as for example, wood, metal, plastic, ceramic, composite objects, glass, fibers, textiles, leather, stone, concrete and other materials. The object may be coated with the polyurethane dispersion, which is subsequently cured, after film formation.

The polyurethane polymer aqueous dispersions of the present disclosure may be used to form coatings, in particular paints, varnishes, inks, that provide protection against mechanical, chemical and/or environmental effects. In other embodiments, the polyurethane dispersions may be used as adhesives, sealants, surface modifiers, surface coatings and cosmetics.

In at least one embodiment, the polyurethane polymer aqueous dispersions of the present disclosure may be used as a curable binder to form a radiation curable or peroxide curable aqueous composition.

The polyurethane dispersions of the present disclosure may also be used for adhesives, sealants, inks and other applications, such as providing surface texture or haptic effects.

The polyurethane coatings formed from polyurethane dispersions of the present disclosure may be used to provide scratch, abrasion and wear resistance ; UV protection; corrosion resistance ; surface appearance, such as a glossy or flat appearance ; chemical and stain resistance ; hydrolytic resistance ; flame retardancy ; anti-microbial activity ; electrical conduction or insulation ; barrier or permeability to gasses ; adhesion ; haptic effects such as soft touch ; easy cleaning and anti-fingerprint. The properties of the resultant polyurethane coatings may be controlled by varying the amounts of the components present within the polyurethane dispersions described above.

## EXAMPLES

### Example 1

A polyester polyol was made using the following procedure : 1,3-propanediol (177 g), isosorbide (681 g), succinic acid (551 g), which were all derived from renewable sources, along with toluene (388 g) and 70% methanesulfonic acid in water (17 g) were charged to a reaction vessel with fitted with a side arm for collection of evolved water. The mixture was heated to 112°C for 21 hours at which time production of water had substantially ceased. After removal of the toluene by vacuum distillation, the final polyester product was a viscous liquid with hydroxyl number of 200 mg KOH/g.

### Example 2

A polyester polyol was prepared from isosorbide (98 g) and d,l-lactide (240 g) by heating to 120°C for several hours in the presence of stannous octoate catalyst. The final polyester product was a viscous liquid with hydroxyl number of 211 mg KOH/g.

### Example 3 - Preparation of a UV-curable Polvurethane Dispersion (UV-PUD)

A reaction vessel suitable for polyurethane preparation was charged with ditrimethylol propane triacrylate (OH value = 163 mg KOH/g, 206 g), the polyester polyol of Example 1 (388 g), dimethylolpropionic acid (113 g), MeHQ (4.8 g), dibutyltin dilaurate (3.2g) and ethoxylated trimethylolpropane triacrylate (Sartomer SR454, 1603 g) and the mixture was heated to 50°C. Isophorone diisocyanate (888 g) was added over 30 minutes while increasing the temperature to 70°C. The reaction was held at 70°C until the %NCO by titration was constant at which point the temperature was lowered to 55°C. Triethylamine (85 g) was added followed by, with vigorous agitation, de-ionized water (4577 g). After 5 minutes, ethylenediamine (92 g) dissolved in de-ionized water (93 g) was added and agitation was continued for another 2 hours. After filtration through a 100 micron filter bag, the final dispersion had the following properties : w/w % solids = 42.0, viscosity at 25°C = 6.1 mPa.s (6.1 cP), average particle size = 114 nm and pH = 7.23.

### Example 4 - Preparation of a UV-curable Polvurethane Dispersion (UV-PUD)

A reaction vessel suitable for polyurethane preparation was charged with ditrimethylol propane triacrylate (OH

value = 163 mg KOH/g, 130 g), the polyester polyol of Example 1 (101 g), poly(1,3-propanediol) (200 g) (product of DuPont, 1000 MW) dimethylolpropionic acid (78 g), MeHQ (3.3 g), dibutyltin dilaurate (2.2 g) and ethoxylated trimethylolpropane triacrylate (Sartomer SR454, 1110 g) and the mixture was heated to 50°C. Isophorone diisocyanate (590 g) was added over 30 minutes while increasing the temperature to 70°C. The reaction was held at 70°C until the %NCO by titration was constant at which point the temperature was lowered to 55°C. Triethylamine (59 g) was added followed by, with vigorous agitation, de-ionized water (3135 g). After 5 minutes, ethylenediamine (58 g) dissolved in de-ionized water (64 g) was added and agitation was continued for another 2 hours. After filtration through a 100 micron filter bag, the final dispersion had the following properties : w/w % solids = 41.3, viscosity at 25°C =10.2 mPa.s (10.2 cP), average particle size = 126 nm and pH = 7.2.

**Example 5 - Preparation of a UV-curable Polvurethane Dispersion (UV-PUD)**

The procedure of Example 4 was followed but the following recipe was used : di-trimethylolpropanetriacrylate (OH value = 163 mg KOH/g, 124 g), the polyester polyol of Example 1 (210 g), poly(1,3-propanediol) (140 g) (product of DuPont, 1000 MW), dimethylolpropionic acid (84 g), MeHQ (3.6 g), dibutyltin dilaurate (2.4 g) and ethoxylated trimethylolpropane triacrylate (Sartomer SR454, 1195 g), isophorone diisocyanate (631 g), triethylamine (63 g), de-ionized water (3408 g) and ethylene diamine + water (68 g, 70 g). After filtration through a 100 micron filter bag, the final dispersion had the following properties : w/w % solids = 41.1, viscosity at 25°C = 10.2 mPa.s (10.2 cP), average particle size = 176 nm and pH = 7.25.

**Example 6 - Preparation of a UV-curable Polvurethane Dispersion (UV-PUD)**

A reaction vessel suitable for polyurethane preparation was charged with dimethylolpropionic acid (85 g), MeHQ (2.8 g), dibutyltin dilaurate (1.9 g), ethoxylated trimethylolpropane triacrylate (Sartomer SR454, 1204 g) and isophorone diisocyanate (572 g) and the mixture was heated to 70°C until the %NCO content by titration dropped to about 7.9%. Di-trimethylolpropanetriacrylate (OH value = 163 mg KOH/g, 98 g), the polyester polyol of Example 2 (145 g), poly(1,3-propanediol) (298 g) (product of DuPont, 1000 MW), MeHQ (3.6 g) and an additional 1.9 g of dibutyltin dilaurate were then added and the temperature maintained at 70°C until a constant %NCO content was achieved. The temperature was reduced to 55°C and triethylamine (64 g) was added followed by, with vigorous agitation, de-ionized water (3359 g). After 5 minutes, ethylenediamine (49 g) dissolved in de-ionized water (120 g) was added and agitation continued for another two hours. After filtration through a 100 micron filter bag, the final dispersion had the following properties : w/w % solids = 40.6, viscosity at 25°C = 12.6 mPa.s (12.6 cP), average particle size = 118 nm and pH = 7.79.

**Example 7 - Preparation of a UV-curable Polvurethane Dispersion (UV-PUD)**

A reaction vessel suitable for polyurethane preparation was charged with dimethylolpropionic acid (115 g), MeHQ (4.9 g), dibutyltin dilaurate (3.3 g), ethoxylated trimethylolpropane triacrylate (Sartomer SR454, 1633 g) and isophorone diisocyanate (888 g) and the mixture was heated to 70°C until the %NCO content by titration dropped to about 8.9%. An acrylated di-trimethylolpropane with OH value = 163 mg KOH/g (179 g), the polyester polyol of Example 2 (220 g), poly(1,3-propanediol) (223 g) (product of DuPont, 1000 MW) were then added and the temperature maintained at 70°C until a constant %NCO content was achieved. The temperature was reduced to 55°C and triethylamine (87 g) was added followed by, with vigorous agitation, de-ionized water (4595 g). After 5 minutes, ethylenediamine (94 g) dissolved in de-ionized water (164 g) was added and agitation continued for another two hours. After filtration through a 100 micron filter bag, the final dispersion had the following properties : w/w % solids = 41.1, viscosity at 25°C = 8.9 mPa.s (8.9 cP), average particle size = 173 nm and pH = 7.17.

**Example 8 - Curing and Testing of Example UV-PUDs**

For curing and testing of the coating properties, the UV-PUDs were incorporated into a simple formulation consisting of 63.5% UV-PUD (after adjusting to 35% solids) plus 1% associative thickener, 0.5% leveling agent and 5% IRGACURE® 500 photoinitiator based on solids. Drawdowns were made at 152.4 $\mu$ (6 mils) wet film thickness on Leneta charts, glass plates or aluminum panels depending on the tests being run. To ensure water was completely removed from the films and not affecting the test, results drying was done for 30 minutes at 25°C and 30 minutes at 60°C (tests done after drying 10 minutes at 25°C and 10 minutes at 60°C showed similar results to those below). The dried films were cured with 410 mJ/cm$^2$ UVA energy by running at 15.24 m/min (50 fpm : feet per min) through an Inpro UV cure unit with two Hg lamps.

Results from testing of the cured films are shown in Table 1.

**Table 1** : **UV-PUD Cured Coatings Properties**

| | **Koenig Hardness** | **Stain Rating*** | **Taber Abrasion*** | **Tensile Strength** MPa (kPsi) | **Tensile Elongation** (%) | **Modulus** MPa (kPsi) |
|---|---|---|---|---|---|---|
| UV-PUD of Example 3 | 118 | 2 | 3 | Too brittle | | |
| UV-PUD of Example 4 | 98 | 3 | 2 | 30.61 (4.40) | 4.5 | 930.8 (135.0) |
| UV-PUD of Example 5 | 118 | 3 | 3 | Too brittle | | |
| UV-PUD of Example 6 | 106 | 2 | 2 | 26.89 (3.90) | 6.3 | 661.9 (96.0) |
| UV-PUD of Example 7 | 125 | 3 | 3 | Too brittle | | |
| *1 = Best, 5 = Worst. Stain tests were done using mustard, ketchup, coffee, olive oil and ethanol following KCMA procedures. Taber abrasion was measured by weight loss every 200 cycles out to 1000 cycles with a CS17 wheel under 1 kg load. | | | | | | |

**Claims**

1. A curable polyurethane polymer aqueous dispersion, wherein said curable polyurethane is formed by :

    i) the reaction of a) at least one polyol component comprising a1) a non-ionic polyol, a2) at least one polyol bearing at least one ionic or potentially ionic group comprising an acid group or salt thereof and a3) at least one ethylenically unsaturated monoalcohol and/or polyol, with b) at least one polyisocyanate, wherein the number of isocyanate (NCO) groups of the at least one polyisocyanate is in excess with respect to the number of hydroxyl (OH) groups of the at least one polyol component a),
    wherein said at least one polyol component a) comprises in said non-ionic polyol a1), carbon atoms from renewable resources with said polyol a1) being derived from a 1,4:3,6-dianhydrohexitol, with said acid group of polyol a2) being either in the acid form or in the at least partly neutralized form, preferably in the neutralized form and with said at least one ethylenically unsaturated monoalcohol and/or polyol a3) being an isocyanate-reactive ethylenically unsaturated monoalcohol or polyol selected from the group consisting of polyester (meth)acrylates, epoxy (meth)acrylates, polyether (meth)acrylates, polyurethane (meth)acrylates and other hydroxyl group-containing (meth)acrylates
    and said reaction being continued by
    ii) an extension reaction with an isocyanate-reactive chain extender in a second step.

2. The aqueous polyurethane dispersion according to claim 1, wherein the at least one non-ionic polyol a1) comprises or is a polyol formed by reacting a 1,4:3,6-dianhydrohexitol in a polycondensation polymerization reaction with at least one diacid or higher functional carboxylic acid and optionally at least one other diol or polyol.

3. The aqueous polyurethane dispersion according to claim 1, wherein the at least one non-ionic polyol a1) comprises or is a polyol formed by reacting a 1,4:3,6-dianhydrohexitol in a polycondensation polymerization reaction with at least one other diol or polyol and at least one diacid or higher functional carboxylic acid.

4. The aqueous polyurethane dispersion according to claim 2 or 3, wherein the said diol is selected from the group consisting of 1,2-ethanediol, 1,2-propanediol, 1,3-propanediol, 1,4-butanediol, 1,5-pentanediol, 1,6-hexanediol, 1,10-decanediol, 1,12-dodecanediol, 1,3-butanediol, 2,2-dimethyl-1,3-propanediol, 2-methyl-1,3-propanediol, diethylene glycol, triethylene glycol, dipropylene glycol, tripropylene glycol, 1,4- and 1,6-dimethylolcylcohexane, $C_{36}$-dimer diol, hydroxypivaloyl hydroxyl pivalate and ethoxylated and/or propoxylated derivatives thereof and wherein the said polyol is selected from group consisting of glycerol, trimethylolpropane, trimethylolethane, pentaerythritol, di-glycerol, di-trimethylolpropane, di-pentaerythritol, sorbitol and ethoxylated and/or propoxylated derivatives of the thereof.

5. The aqueous polyurethane dispersion according to any one of claims 2 to 4, wherein the said at least one diacid or higher functional carboxylic acid is selected from the group consisting of malonic acid, succinic acid, maleic acid, fumaric acid, itaconic acid, glutaric acid, citric acid, adipic acid, pimelic acid, sebacic acid, dodecanedioic acid, phthalic acid, isophthalic acid, terephthalic acid, naphthalene dicarboxylic acid, $C_{36}$-dimer fatty acids, $C_{54}$-trimer fatty acids, trimellitic acid, pyromellitic acid and anhydrides derivatives of the thereof.

6. The aqueous polyurethane dispersion according to claim 1, wherein the at least one non-ionic polyol a1) comprises or is a polyol formed by reacting a 1,4:3,6-dianhydrohexitol with a hydroxyl functional monocarboxylic acid or by reacting a 1,4:3,6-dianhydrohexitol with a lactone, preferably caprolactone.

7. The aqueous polyurethane dispersion according to claim 1, wherein said non-ionic polyol a1) is formed by using a 1,4:3,6-dianhydrohexitol as a hydroxyl functional initiator molecule in a ring opening polymerization of a lactide.

8. The aqueous polyurethane dispersion according to any one of claims 1 to 7, wherein the said 1,4:3,6-dianhydrohexitol is selected from the group consisting of isosorbide, isomannide and isoidide.

9. The aqueous polyurethane dispersion according to claim 8, wherein the 1,4:3,6-dianhydrohexitol is isosorbide.

10. The aqueous polyurethane dispersion according to any one of claims 1 to 9, wherein it further comprises a curable ethylenically unsaturated monomer acting as a curable diluent and present in the reaction of step i) as defined in claim 1.

11. The aqueous polyurethane dispersion according to any one of claims 1 to 10, wherein it is a radiation-curable or a peroxide-curable aqueous polyurethane dispersion.

12. The curable aqueous polyurethane dispersion according to any one of claims 1 to 11, wherein the at least one polyol component a), in particular polyol a1), has a content by weight of $^{14}C$ such that the $^{14}C/^{12}C$ ratio is greater than $0.1 \times 10^{-12}$.

13. A method of producing a curable polyurethane aqueous dispersion as defined according to any one of claims 1 to 12, wherein it comprises following steps :

i) reacting at least one polyol component a) comprising a1) a non-ionic polyol, a2) at least one polyol bearing at least one ionic or potentially ionic group comprising an acid group or salt thereof and a3) at least one ethylenically unsaturated monoalcohol and/or polyol, with b) at least one polyisocyanate, wherein the number of isocyanate (NCO) groups of the at least one polyisocyanate is in excess with respect to the number of hydroxyl (OH) groups of said at least one polyol component a), wherein said at least one polyol component a) comprises, in the non-ionic polyol a1), carbon atoms from renewable resources, said polyol a1) being derived from a 1,4:3,6-dianhydrohexitol, wherein said at least one ethylenically unsaturated monoalcohol and/or polyol a3) is an isocyanate-reactive ethylenically unsaturated monoalcohol or polyol selected from the group consisting of polyester (meth)acrylates, epoxy (meth)acrylates, polyether (meth)acrylates, polyurethane (meth)acrylates and other hydroxyl group-containing (meth)acrylates;
ii) neutralizing at least partly, preferably completely the acid groups of said polyol a2) with a neutralizing agent and agitating to obtain a polyurethane pre-polymer aqueous dispersion ; and
iii) chain extending said pre-polymer of step ii), by reacting with an isocyanate-reactive chain extender.

14. A polyurethane pre-polymer aqueous dispersion obtainable by a method as defined in claim 13, wherein it comprises the steps i) and ii) as obtained at the end of step ii) before the step iii) of chain extending.

15. A curable aqueous composition, wherein it comprises as a curable binder at least one aqueous polyurethane dispersion as defined according to any one of claims 1 to 12 or as obtained by a method as defined according to claim 13.

16. A curable composition according to claim 15, wherein it is selected from curable coatings, in particular paints, varnishes, inks compositions or from adhesives, sealants or cosmetics compositions.

17. Use of the aqueous polyurethane polymer dispersion as defined according to any one of claims 1 to 12 or as obtained by a process as defined in claim 13, wherein it is for use in coatings, in particular in paints, varnishes, inks or in adhesives, in sealants or in cosmetics.

18. Cured polyurethane, wherein it results from the cure of an aqueous polyurethane dispersion as defined in any one of claims 1 to 12 or as obtained by a method as defined in claim 13.

19. Cured polyurethane according to claim 18, wherein it is used as a coating, preferably as a paint, a varnish and an ink or used as an adhesive, as a sealant or as a cosmetic.

**Patentansprüche**

1. Wässrige Dispersion eines härtbaren Polyurethanpolymers, wobei das härtbare Polyurethan gebildet wird durch

   i) die Umsetzung von a) mindestens einer Polyolkomponente, die a1) ein nichtionisches Polyol, a2) mindestens ein Polyol mit mindestens einer ionischen oder potentiell ionischen Gruppe, die eine Säuregruppe oder ein Salz davon umfasst, und a3) mindestens einen ethylenisch ungesättigten Monoalkohol und/oder ein ethylenisch ungesättigtes Polyol umfasst, mit b) mindestens einem Polyisocyanat, wobei die Zahl von Isocyanat(NCO)-Gruppen des mindestens einen Polyisocyanats im Überschuss in Bezug auf die Zahl von Hydroxyl(OH)-Gruppen der mindestens einen Polyolkomponente a) vorliegt,
   wobei die mindestens eine Polyolkomponente a) in dem nichtionischen Polyol a1) Kohlenstoffatome aus erneuerbaren Quellen umfasst, wobei sich das Polyol a1) von einem 1,4:3,6-Dianhydrohexitol ableitet, wobei die Säuregruppe von Polyol a2) entweder in der Säureform oder in der mindestens teilweise neutralisierten Form, vorzugsweise in der neutralisierten Form, vorliegt und wobei es sich bei dem mindestens einen ethylenisch ungesättigten Monoalkohol und/oder Polyol a3) um einen isocyanatreaktiven ethylenisch ungesättigten Monoalkohol oder ein isocyanatreaktives ethylenisch ungesättigtes Polyol aus der Gruppe bestehend aus Polyester(meth)acrylaten, Epoxy(meth)-acrylaten, Polyether(meth)acrylaten, Polyurethan (meth)acrylaten und anderen hydroxylgruppenhaltigen (Meth)acrylaten handelt, und die Umsetzung durch
   ii) eine Verlängerungsreaktion mit einem isocyanatreaktiven Kettenverlängerungsmittel in einem zweiten Schritt fortgesetzt wird.

2. Wässrige Polyurethandispersion nach Anspruch 1, wobei das mindestens eine nichtionische Polyol a1) ein durch Umsetzung eines 1,4:3,6-Dianhydrohexitols in einer Polykondensationspolymerisationsreaktion mit mindestens einer Disäure oder einer höherfunktionellen Carbonsäure und gegebenenfalls mindestens einem anderen Diol oder Polyol gebildetes Polyol umfasst oder ist.

3. Wässrige Polyurethandispersion nach Anspruch 1, wobei das mindestens eine nichtionische Polyol a1) ein durch Umsetzung eines 1,4:3,6-Dianhydrohexitols in einer Polykondensationspolymerisationsreaktion mit mindestens einem anderen Diol oder Polyol und mindestens einer Disäure oder einer höherfunktionellen Carbonsäure gebildetes Polyol umfasst oder ist.

4. Wässrige Polyurethandispersion nach Anspruch 2 oder 3, wobei das Diol aus der Gruppe bestehend aus 1,2-Ethandiol, 1,2-Propandiol, 1,3-Propandiol, 1,4-Butandiol, 1,5-Pentandiol, 1,6-Hexandiol, 1,10-Decandiol, 1,12-Dodecandiol, 1,3-Butandiol, 2,2-Dimethyl-1,3-propandiol, 2-Methyl-1,3-propandiol, Diethylenglykol, Triethylenglykol, Dipropylenglykol, Tripropylenglykol, 1,4- und 1,6-Dimethylolcylcohexan, $C_{36}$-Dimerdiol, Hydroxypivaloylhydroxylpivalat und ethoxylierten und/oder propoxylierten Derivaten davon ausgewählt ist und wobei das Polyol aus der Gruppe bestehend aus Glycerin, Trimethylolpropan, Trimethylolethan, Pentaerythritol, Diglycerin, Ditrimethylolpropan, Dipentaerythritol, Sorbitol und ethoxylierten und/oder propoxylierten Derivaten davon ausgewählt ist.

5. Wässrige Polyurethandispersion nach einem der Ansprüche 2 bis 4, wobei die mindestens eine Disäure oder höherfunktionelle Carbonsäure aus der Gruppe bestehend aus Malonsäure, Bernsteinsäure, Maleinsäure, Fumarsäure, Itaconsäure, Glutarsäure, Citronensäure, Adipinsäure, Pimelinsäure, Sebacinsäure, Dodecandisäure, Phthalsäure, Isophthalsäure, Terephthalsäure, Naphthalindicarbonsäure, $C_{36}$-Dimerfettsäuren, $C_{54}$-Trimerfettsäuren, Trimellitsäure, Pyromellitsäure und Anhydridderivaten davon ausgewählt ist.

6. Wässrige Polyurethandispersion nach Anspruch 1, wobei das mindestens eine nichtionische Polyol a1) ein durch Umsetzung eines 1,4:3,6-Dianhydrohexitols mit einer hydroxylfunktionellen Monocarbonsäure oder durch Umsetzung eines 1,4:3,6-Dianhydrohexitols mit einem Lacton, vorzugsweise Caprolacton, gebildetes Polyol umfasst oder ist.

7. Wässrige Polyurethandispersion nach Anspruch 1, wobei das nichtionische Polyol a1) durch Verwendung eines

1,4:3,6-Dianhydrohexitols als hydroxylfunktionelles Initiatormolekül in einer Ring-öffnungspolymerisation eines Lactids gebildet wird.

8. Wässrige Polyurethandispersion nach einem der Ansprüche 1 bis 7, wobei das 1,4:3,6-Dianhydrohexitol aus der Gruppe bestehend aus Isosorbid, Isomannid und Isoidid ausgewählt ist.

9. Wässrige Polyurethandispersion nach Anspruch 8, wobei es sich bei dem 1,4:3,6-Dianhydrohexitol um Isosorbid handelt.

10. Wässrige Polyurethandispersion nach einem der Ansprüche 1 bis 9, wobei sie ferner ein härtbares ethylenisch ungesättigtes Monomer umfasst, das als härtbares Verdünnungsmittel fungiert und bei der Umsetzung von Schritt i) gemäß Anspruch 1 zugegen ist.

11. Wässrige Polyurethandispersion nach einem der Ansprüche 1 bis 10, bei der es sich um eine strahlungshärtbare oder peroxidhärtbare wässrige Polyurethandispersion handelt.

12. Härtbare wässrige Polyurethandispersion nach einem der Ansprüche 1 bis 11, wobei die mindestens eine Polyolkomponente a), insbesondere Polyol a1), einen solchen Gewichtsgehalt an $^{14}C$ aufweist, dass das $^{14}C/^{12}C$-Verhältnis größer als $0{,}1 \times 10^{-12}$ ist.

13. Verfahren zur Herstellung einer wässrigen Dispersion eines härtbaren Polyurethans gemäß einem der Ansprüche 1 bis 12, wobei es folgende Schritte umfasst:

   i) Umsetzen von mindestens einer Polyolkomponente a), die a1) ein nichtionisches Polyol, a2) mindestens ein Polyol mit mindestens einer ionischen oder potentiell ionischen Gruppe, die eine Säuregruppe oder ein Salz davon umfasst, und a3) mindestens einen ethylenisch ungesättigten Monoalkohol und/oder ein ethylenisch ungesättigtes Polyol umfasst, mit b) mindestens einem Polyisocyanat, wobei die Zahl von Isocyanat(NCO)-Gruppen des mindestens einen Polyisocyanats im Überschuss in Bezug auf die Zahl von Hydroxyl(OH)-Gruppen der mindestens einen Polyolkomponente a) vorliegt, wobei die mindestens eine Polyolkomponente a) in dem nichtionischen Polyol a1) Kohlenstoffatome aus erneuerbaren Quellen umfasst, wobei sich das Polyol a1) von einem 1,4:3,6-Dianhydrohexitol ableitet, und/oder es sich bei dem mindestens einen ethylenisch ungesättigten Monoalkohol und/oder Polyol a3) um einen isocyanatreaktiven ethylenisch ungesättigten Monoalkohol oder ein isocyanatreaktives ethylenisch ungesättigtes Polyol aus der Gruppe bestehend aus Polyester(meth)acrylaten, Epoxy(meth)-acrylaten, Polyether(meth)acrylaten, Polyurethan(meth)acrylaten und anderen hydroxylgruppenhaltigen (Meth)acrylaten handelt,
   ii) mindestens teilweises, vorzugsweise vollständiges Neutralisieren der Säuregruppen des Polyols a2) mit einem Neutralisationsmittel und Rühren zum Erhalt einer wässrigen Polyurethanprepolymerdispersion; und
   iii) Kettenverlängern des Prepolymers aus Schritt ii) durch Umsetzung mit einem isocyanatreaktiven Kettenverlängerungsmittel.

14. Wässrige Polyurethanprepolymerdispersion, die durch ein Verfahren gemäß Anspruch 13 erhältlich ist, wobei das die Schritte i) und ii) umfasst, wie am Ende von Schritt ii) vor dem Schritt iii) des Kettenverlängerns erhalten.

15. Härtbare wässrige Zusammensetzung, wobei sie als härtbares Bindemittel mindestens eine wässrige Polyurethandispersion gemäß einem der Ansprüche 1 bis 12 oder eine wie durch ein Verfahren gemäß Anspruch 13 erhaltene wässrige Polyurethandispersion umfasst.

16. Härtbare Zusammensetzung nach Anspruch 15, wobei sie aus härtbaren Beschichtungen, insbesondere Anstrichmitteln, Klarlacken, Tintenzusammensetzungen, oder aus Klebstoffen, Dichtstoffen oder Kosmetikzusammensetzungen ausgewählt ist.

17. Verwendung der wässrigen Polyurethanpolymerdispersion gemäß einem der Ansprüche 1 bis 12 oder der wie durch ein Verfahren gemäß Anspruch 13 erhaltenen wässrigen Polyurethanpolymerdispersion, wobei sie zur Verwendung in Beschichtungen, insbesondere Anstrichmitteln, Klarlacken, Tinten, oder in Klebstoffen, in Dichtstoffen oder in Kosmetika ist.

18. Gehärtetes Polyurethan, wobei es aus der Härtung einer wässrigen Polyurethandispersion gemäß einem der Ansprüche 1 bis 12 oder einer wie durch ein Verfahren gemäß Anspruch 13 erhaltenen wässrigen Polyurethandispersion

resultiert.

19. Gehärtetes Polyurethan nach Anspruch 18, wobei es als Beschichtung, vorzugsweise als Anstrichmittel, Klarlack und Tinte, oder als Klebstoff, als Dichtstoff oder als Kosmetikum verwendet wird.

## Revendications

1. Dispersion aqueuse de polymère de polyuréthane durcissable, ledit polyuréthane durcissable étant formé par :

   i) la réaction de a) au moins un composant de type polyol comprenant a1) un polyol non ionique, a2) au moins un polyol portant au moins un groupe ionique ou potentiellement ionique comprenant un groupe acide ou un sel correspondant et a3) au moins un monoalcool et/ou polyol éthyléniquement insaturé, avec b) au moins un polyisocyanate, le nombre de groupes isocyanate (NCO) de l'au moins un polyisocyanate se trouvant en excès par rapport au nombre de groupes hydroxyles (OH) de l'au moins un composant de type polyol a), ledit au moins un composant de type polyol a) comprenant, dans ledit polyol non ionique a1), des atomes de carbone provenant de ressources renouvelables, ledit polyol a1) étant issu d'un 1,4:3,6-dianhydrohexitol, ledit groupe acide du polyol a2) se trouvant soit sous forme acide, soit sous forme au moins en partie neutralisée, préférablement sous forme neutralisée et ledit au moins un monoalcool et/ou polyol éthyléniquement insaturé a3) étant un monoalcool et/ou un polyol éthyléniquement insaturé réactif vis-à-vis d'isocyanate choisi dans le groupe constitué par les polyester-(méth)acrylates, les époxy-(méth)acrylates, les polyéther-(méthacrylates), les polyuréthane-(méth)acrylates et d'autres (méth)acrylates contenant des groupes hydroxyle et ladite réaction étant suivie par
   ii) une réaction d'allongement avec un agent d'allongement de chaîne réactif vis-à-vis d'isocyanate dans une deuxième étape.

2. Dispersion aqueuse de polyuréthane selon la revendication 1, l'au moins un polyol non ionique a1) comprenant ou étant un polyol formé par réaction d'un 1,4:3,6-dianhydrohexitol dans une réaction de polymérisation par polycondensation avec au moins un diacide ou un acide carboxylique à fonctionnalité plus élevée et éventuellement au moins un autre diol ou polyol.

3. Dispersion aqueuse de polyuréthane selon la revendication 1, l'au moins un polyol non ionique a1) comprenant ou étant un polyol formé par réaction d'un 1,4:3,6-dianhydrohexitol dans une réaction de polymérisation par polycondensation avec au moins un autre diol ou polyol et au moins un diacide ou un acide carboxylique à fonctionnalité plus élevée.

4. Dispersion aqueuse de polyuréthane selon la revendication 2 ou 3, ledit diol étant choisi dans le groupe constitué par le 1,2-éthanediol, le 1,2-propanediol, le 1,3-propanediol, le 1,4-butanediol, le 1,5-pentanediol, le 1,6-hexanediol, le 1,10-décanediol, le 1,12-dodécanediol, le 1,3-butanediol, le 2,2-diméthyl-1,3-propanediol, le 2-méthyl-1,3-propanediol, le diéthylèneglycol, le triéthylèneglycol, le dipropylèneglycol, le tripropylèneglycol, le 1,4- et le 1,6-diméthylolcyclohexane, le $C_{36}$-dimère diol, l'hydroxypivalate d'hydroxypivaloyle et des dérivés éthoxylés et/ou propoxylés correspondants et ledit polyol étant choisi dans le groupe constitué par le glycérol, le triméthylolpropane, le triméthyloléthane, le pentaérythritol, le diglycérol, le di-triméthylolpropane, le di-pentaérythritol, le sorbitol et des dérivés éthoxylés et/ou propoxylés correspondants.

5. Dispersion aqueuse de polyuréthane selon l'une quelconque des revendications 2 à 4, ledit au moins un diacide ou un acide carboxylique à fonctionnalité plus élevée étant choisi dans le groupe constitué par l'acide malonique, l'acide succinique, l'acide maléique, l'acide fumarique, l'acide itaconique, l'acide glutarique, l'acide citrique, l'acide adipique, l'acide pimélique, l'acide sébacique, l'acide dodécanedioïque, l'acide phtalique, l'acide isophtalique, l'acide téréphtalique, l'acide naphtalènedicarboxylique, les acides gras de $C_{36}$-dimère, les acides gras de $C_{54}$-trimère, l'acide trimellitique, l'acide pyromellitique et des dérivés anhydrides correspondants.

6. Dispersion aqueuse de polyuréthane selon la revendication 1, l'au moins un polyol non ionique a1) comprenant ou étant un polyol formé par la réaction d'un 1,4:3,6-dianhydrohexitol avec un acide monocarboxylique à fonctionnalité hydroxyle ou par réaction d'un 1,4:3,6-dianhydrohexitol avec une lactone, préférablement la caprolactone.

7. Dispersion aqueuse de polyuréthane selon la revendication 1, l'au moins un polyol non ionique a1) étant formé en utilisant un 1,4:3,6-dianhydrohexitol en tant qu'une molécule initiatrice à fonctionnalité hydroxyle dans une réaction

de polymérisation par ouverture de cycle d'un lactide.

8. Dispersion aqueuse de polyuréthane selon l'une quelconque des revendications 1 à 7, ledit 1,4:3,6-dianhydrohexitol étant choisi dans le groupe constitué par l'isosorbide, l'isomannide et l'isoidide.

9. Dispersion aqueuse de polyuréthane selon la revendication 8, le 1,4:3,6-dianhydrohexitol étant l'isosorbide.

10. Dispersion aqueuse de polyuréthane selon l'une quelconque des revendications 1 à 9, comprenant en outre un monomère éthyléniquement insaturé durcissable agissant en tant que diluant durcissable et étant présent dans la réaction de l'étape i) telle que définie dans la revendication 1.

11. Dispersion aqueuse de polyuréthane selon l'une quelconque des revendications 1 à 10, qui est une dispersion aqueuse de polyuréthane durcissable par un rayonnement ou durcissable par un peroxyde.

12. Dispersion aqueuse durcissable de polyuréthane selon l'une quelconque des revendications 1 à 11, l'au moins un composant de type polyol a), en particulier le polyol a1), possédant une teneur en poids de $^{14}C$ telle que le rapport $^{14}C/^{12}C$ est supérieur à $0,1 \times 10^{-12}$.

13. Procédé de production d'une dispersion aqueuse durcissable de polyuréthane telle que définie selon l'une quelconque des revendications 1 à 12, comprenant les étapes suivantes :

i) la mise en réaction d'au moins un composant de type polyol a) comprenant a1) un polyol non ionique, a2) au moins un polyol portant au moins un groupe ionique ou potentiellement ionique comprenant un groupe acide ou un sel correspondant et a3) au moins un monoalcool et/ou polyol éthyléniquement insaturé, avec b) au moins un polyisocyanate, le nombre de groupes isocyanate (NCO) de l'au moins un polyisocyanate se trouvant en excès par rapport au nombre de groupes hydroxyles (OH) dudit composant de type polyol a), ledit au moins un composant de type polyol a) comprenant, dans le polyol non ionique a1), des atomes de carbone provenant de ressources renouvelables, ledit polyol a1) étant issu d'un 1,4:3,6-dianhydrohexitol, ledit au moins un monoalcool et/ou polyol éthyléniquement insaturé a3) étant un monoalcool et/ou un polyol éthyléniquement insaturé réactif vis-à-vis d'isocyanate choisi dans le groupe constitué par les polyester-(méth)acrylates, les époxy-(méth)acrylates, les polyéther-(méthacrylates), les polyuréthane-(méth)acrylates et d'autres (méth)acrylates contenant des groupes hydroxyle
ii) la neutralisation au moins en partie, préférablement complète, des groupes acides dudit polyol a2) avec un agent de neutralisation et l'agitation pour obtenir une dispersion aqueuse de prépolymère de polyuréthane ; et
iii) l'allongement de chaîne dudit prépolymère de l'étape ii), par la réaction avec un agent d'allongement de chaîne réactif vis-à-vis d'isocyanate.

14. Dispersion aqueuse de prépolymère de polyuréthane pouvant être obtenue par un procédé tel que défini selon la revendication 13, comprenant les étapes i) et ii) telles qu'obtenues à la fin de l'étape ii) avant l'étape iii) d'allongement de chaîne.

15. Composition aqueuse durcissable, comprenant en tant qu'un liant durcissable au moins une dispersion aqueuse de polyuréthane telle que définie selon l'une quelconque des revendications 1 à 12
ou
telle qu'obtenue par un procédé tel que défini selon la revendication 13.

16. Composition durcissable selon la revendication 15, qui est choisie parmi des revêtements durcissables, en particulier des peintures, des vernis, des compositions d'encres ou parmi des adhésifs, des agents d'étanchéification ou des compositions cosmétiques.

17. Utilisation de la dispersion aqueuse de polymère de polyuréthane telle que définie selon l'une quelconque des revendications 1 à 12 ou telle qu'obtenue par un procédé tel que défini selon la revendication 13,
qui est destinée à
une utilisation dans des revêtements, en particulier dans des peintures, des vernis, des encres ou dans des adhésifs, des agents d'étanchéification ou dans des compositions cosmétiques.

18. Polyuréthane durci, résultant du durcissement d'une dispersion aqueuse de polyuréthane telle que définie selon l'une quelconque des revendications 1 à 12 ou telle qu'obtenue par un procédé tel que défini selon la revendication 13.

**19.** Polyuréthane durci selon la revendication 18, qui est utilisé en tant qu'un revêtement, préférablement en tant qu'une peinture, un vernis et une encre ou utilisé en tant qu'un adhésif, en tant qu'un agent d'étanchéification ou en tant qu'un cosmétique.

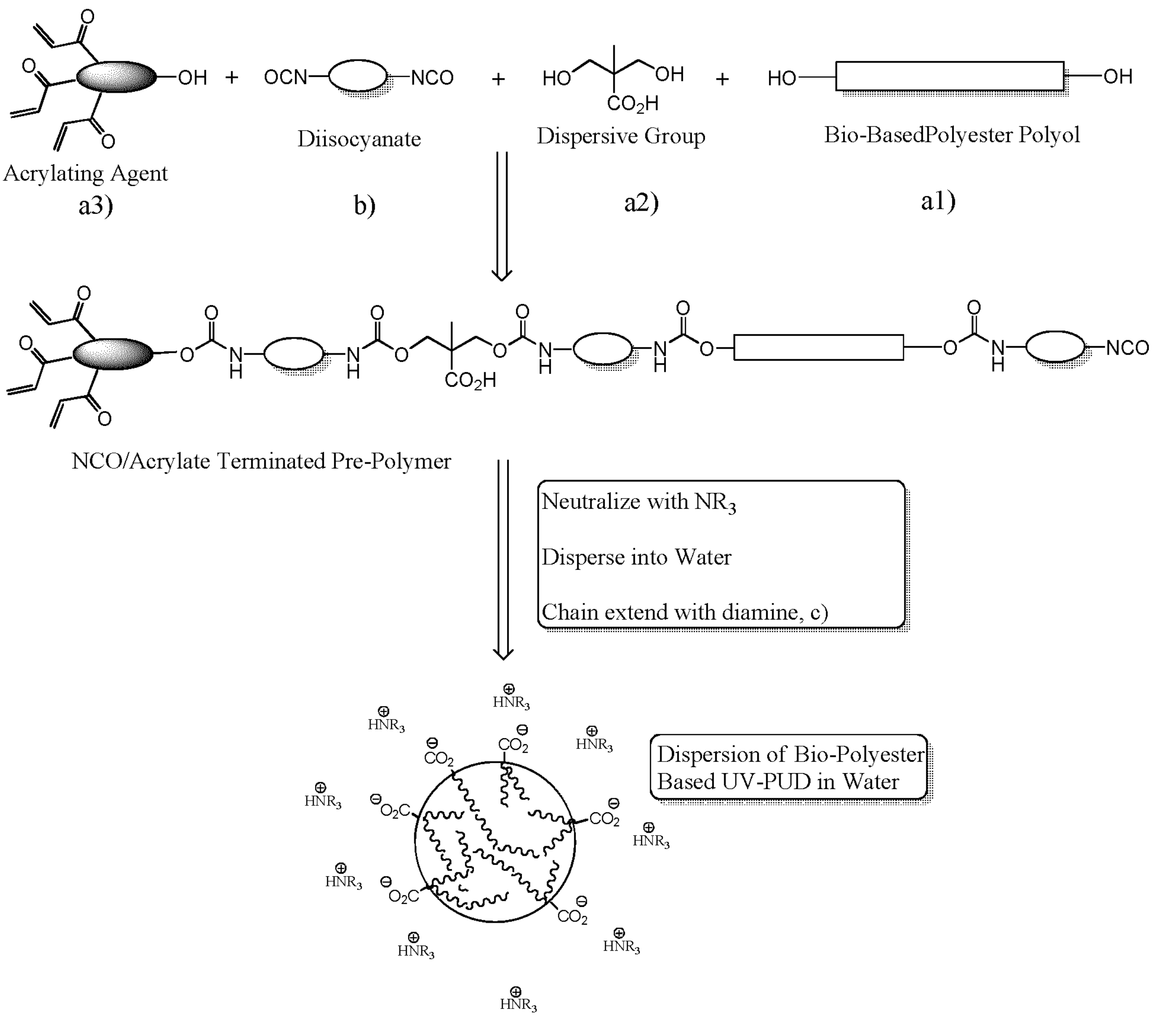
Acrylating Agent
a3)
Diisocyanate
b)
Dispersive Group
a2)
Bio-BasedPolyester Polyol
a1)
NCO/Acrylate Terminated Pre-Polymer
Neutralize with $NR_3$
Disperse into Water
Chain extend with diamine, c)
Dispersion of Bio-Polyester
Based UV-PUD in Water

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011047369 A
- US 8106148 B
- WO 2011098272 A
- US 20050143549
- US 61907434
- US 61986165


### Non-patent literature cited in the description


- **CHANG et al.** Linseed-oil-based waterborne UV/air dual-cured wood coatings. *Progress in Organic Coatings,* 2013, vol. 76, 1024-1031
- **XIA et al.** Soybean Oil-Isosorbide-Based Waterborne Polyurethane-Urea Dispersions. *ChemSusChem,* 2011, vol. 4, 386-391
- *Macromolecules,* 1976, vol. 9, 199-221